# EUROPEAN PATENT SPECIFICATION

(11) **EP 1 955 424 B1**
(45) Date of publication and mention of the grant of the patent: **01.06.2011**
(21) Application number: 06819843.1
(22) Date of filing: 29.11.2006
(51) Int. Cl.: H02H 7/085

(54) **AN ELECTRIC MOTOR**
ELEKTROMOTOR
MOTEUR ELECTRIQUE

(30) Priority: 01.12.2005 TR 200504810
(43) Date of publication of application: 13.08.2008
(73) Proprietor: Arçelik Anonim Sirketi, 34950 Istanbul (TR)
(72) Inventor: EKIN, Cihad, 34950 Istanbul (TR)
(86) International application number: PCT/EP2006/069074
(87) International publication number: WO 2007/063080

(56) References cited:
- WO-A-2004/049535
- DE-A1- 4 344 378
- GB-A- 2 249 441

## Description

The present invention relates to an electric motor wherein a thermal protector is utilized to prevent overheating.

Thermal protectors are utilized for the protection of electric motors against overheating that occurs in operational conditions of overloading and high current under conditions like locking of the rotor. The most preferred thermal protectors are the bimetal type comprising stationary and movable parts. The bimetal thermal protectors function like an electric switch, of which the stationary part is in contact with the movable part during normal operation of the electric motor, and when the electric motor is overheated due to overloading, the movable part is deformed with the effect of heat, losing contact with the stationary part and not allowing the flow of electric current. The thermal protectors can be situated on the motor windings or anywhere that the heat can be detected and are connected in series to the motor windings to stop the operation of the electric motor by cutting off the electricity in cases of overheating and/or excessive rise in the current.

In an electric motor driven by DC current, if the thermal protector sensitive to high current and overheating is connected in series to the line where DC current flows, for example to the motor windings, it will malfunction in a short period of time and will not be able to serve since it will be subject to continuous high current, therefore it cannot be connected to the motor windings through which DC current flows.

In order to solve this problem, in a brushless DC electric motor as in the Great Britain Patent no. GB2249441, the AC supply fed into the motor control circuit is transformed to DC through a rectifier and the thermal protector is connected in series to the AC voltage line but not to the motor windings wherein the DC current flows.

The aim of the present invention is the realization of an electric motor wherein a thermal protector is utilized to prevent overheating and the thermal protector is prevented from being damaged as a result of high current.

An electric motor according to the present invention is defined in claim 1.

The electric motor of the present invention is an electric motor that actuates a household appliance like a washer/dryer and is powered by DC current. The electronic card that regulates the operation of the electric motor, feeds the electric motor with DC current, changing AC voltage to DC voltage by the help of a rectifier it comprises. A thermal protector is utilized for cutting off the electricity when the electric motor is overheated. The thermal protector, independent from the AC and DC lines, is connected to a separate thermal protector circuit through which a low current flows, such that it will not be harmed from electric current and will only detect the rising temperature of the motor. The thermal protector circuit comprises a low power voltage supply and a resistance of high value and the current produced in this circuit, which is lower than 1mA, flows through the thermal protector. The resistance terminals in the thermal protector circuit are connected to the control card and the current value from the resistance terminals is monitored. When the current from the resistance terminals becomes zero, the main power supply feeding the electric motor is cut off by the electronic card detecting that current does not flow through the thermal protector due to overheating.

The electric motor realized in order to attain the aim of the present invention is illustrated in the attached figures, where:

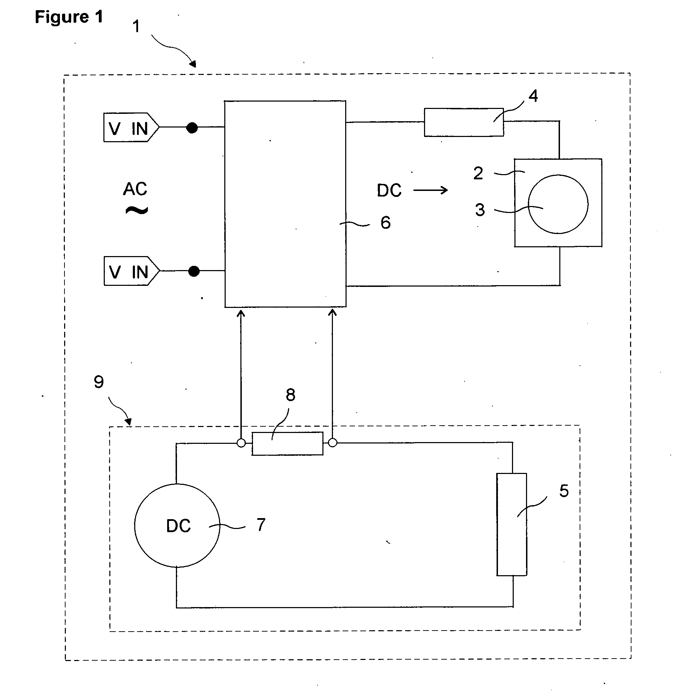

Figure 1 - is the schematic view of the control circuit of an electric motor and the electrical connections of a thermal protector.

The elements shown in figures are numbered as follows:

1 - Electric motor

2 - Stator

3 - Rotor

4 - Winding

5 - Thermal protector

6 - Control card

7 - DC voltage supply

8 - Resistance

9 - Thermal protector circuit

The electric motor (1) utilized in household appliances such as a washer/dryer, comprises a stator (2), a rotor (3), a winding (4) formed of insulated copper wire, the diameter and number of windings determined according to the desired power and rpm, a control card (6) that converts the AC voltage from the power supply to the DC voltage feeding the electric motor (1), and a thermal protector circuit (9) having a thermal protector (5) situated on the winding (4) or in its vicinity, detecting the rise in temperature when there is overload or locking of the rotor (3), cutting off the current that passes through itself and a DC voltage supply (7) connected in series to the thermal protector (5) producing a low value current, providing to feed the thermal protector (5) with the current produced by the DC voltage supply (7), independently from the current received from the main power supply and delivered to the winding (4).

In the electric motor (1) of the present invention, whether or not current flows in the thermal protector circuit (9) is controlled by the control card (6) and if the current does not flow in the thermal protector circuit (9), the current delivered to the winding (4) is cut off detecting that the thermal protector (5) has cut off the current due to overheating.

In another embodiment of the present invention, the thermal protector circuit (9) comprises a resistance (8) connected in series to the thermal protector (5) and the DC voltage supply (7).

In this embodiment, the voltage received from the resistance (8) terminals in the thermal protector circuit (8) is controlled by the control card (6) and when the voltage value between the resistance (8) terminals is zero, it is detected that there current does not flow in the thermal protector circuit (9), and thus the thermal protector (5) has cut off the current flowing through it due to overheating and the current delivered to the winding (4) is cut off.

The DC voltage supply (7) situated on the thermal protector circuit (9) produces a voltage less than 15 Volts. A battery or a low feeding voltage that operates some electronic elements in the household appliance is utilized as a DC voltage supply (7).

The resistance (8) situated on the thermal protector circuit (9) possesses a high resistance value (>10 ohm) and only a low value current (<1mA) is passed over the thermal protector (5) to determine whether or not the thermal protector (5) passes current and the thermal protector (5) is prevented from being damaged during functioning since it is not subjected to a high current.

In the embodiment of the present invention, the low value current produced by the DC voltage supply (7) on the thermal protector circuit (9) is passed over the resistance (8) and the thermal protector (5). This current flowing in the thermal protector circuit (9) results in a reduction of voltage on the resistance (8). This voltage is conveyed to the control card (6) from the resistance (8) terminals and the continuity of the voltage received from the resistance (8) terminals is monitored in the control card (6). At the moment the thermal protector (5) does not allow the passage of current through it, then current does not flow in the thermal protector circuit (9). In this case, the voltage value between the resistance (8) terminals is zero connected in series to the thermal protector circuit (9) and the control card (6) detects that the electric motor (1) has reached a high temperature in a short period of time due to overheating and that the thermal protector (5) has cut off the current flowing therethrough and the current delivered to the winding (4) is cut off.

The electric motor (1) being subject to a high current in cases like the blockage of the rotor (3) also corresponds to a certain temperature value and the selection of a suitable thermal protector (5) provides for cutting off the current delivered to the winding (4) in both overloading and in excessive current.

By means of the embodiment of the present invention, particularly in places where the voltage received from the main power supply is irregular, the thermal protector (5) is not subjected to current fluctuations, hence damage is prevented providing a longer service life since it is fed by a low DC voltage supply (7), separate from the lines delivering the AC voltage received from the power supply and the high value DC voltage feeding the motor (1).

## Claims

1. An electric motor (1) comprising a stator (2), a rotor (3), a winding (4) formed of isolated copper wire, the diameter and number of windings determined according to the desired power and revolution per minute, and a control card (6) that converts an AC voltage received from a main power supply to a DC voltage feeding the electric motor (1), and a separate **thermal protector circuit (9)** through which a low current flows, comprising a thermal protector (5), provided to detect the rise in temperature in case of overload or locking of the rotor (3), cutting off the current that passes through itself and a DC voltage supply (7) connected in series to the thermal protector (5) and producing a low value current, provided to feed the thermal protector (5) with the current produced by the DC voltage supply (7), independently from the current received from the main power supply and delivered to the winding (4), and **characterized in that** said **control card (6)** controlling whether or not current flows in the thermal protector circuit (9) and if the current does not flow, cuts off the current delivered to the winding (4) detecting that the thermal protector (5) has cut off the current flowing through it.

2. An electric motor (1) as in Claim 1, **characterized by** the thermal protector circuit (9) comprising a resistance (8) connected in series to the thermal protector (5) and the DC voltage supply (7).

3. An electric motor (1) as in Claim 2, **characterized by** the control card (6) that controls the voltage received from the resistance (8) terminals and when the voltage value between the resistance (8) terminals is zero, detects that current does not flow through the thermal protector circuit (9) and providing to cut off the current delivered to the winding (4).

## Patentansprüche

1. Elektromotor (1), umfassend einen Stator (2), einen Rotor (3), eine Wicklung (4), die aus isoliertem Kupferdraht gebildet ist, wobei der Durchmesser und die Anzahl der Wicklungen entsprechend der gewünschten Leistung und Umdrehung pro Minute bestimmt wird, und eine Steuerkarte (6), die eine Wechselspannung von einer Hauptstromversorgung in eine Gleichspannung umwandelt, die den Elektromotor (1) versorgt, und **einen separaten Wärmeschutzschaltkreis (9), durch** den ein niedriger Strom fließt, und der ein Wärmeschutzelement (5) umfasst, das dazu vorgesehen ist, im Falle einer Überlastung oder eines Blockierens des Rotors (3) einen Anstieg der Temperatur zu erkennen, einen Strom abschaltet, der durch ihn selbst und durch eine Gleichspannungsversorgung (7) fließt, die in Serie mit dem Wärmeschutzelement (5) verbunden ist, und der einen niedrigwertigen Strom erzeugt, der dazu vorgesehen ist, das Wärmeschutzelement (5) unabhängig von dem Strom von der Hauptstromversorgung, welcher an die Wicklung (4) bereitgestellt wird, mit dem Strom zu versorgen, der von der Gleichspannungsversorgung (7) erzeugt wird, **und dadurch gekennzeichnet, dass** die **Steuerkarte (6)** prüft, ob ein Strom im Wärmeschutzschaltkreis (9) fließt, und für den Fall, dass kein Strom fließt, den Strom unterbricht, der an die Wicklung (4) bereitgestellt wird, indem sie erkennt, dass das Wärmeschutzelement (5) den **dadurch** fließenden Strom unterbrochen hat.

2. Elektromotor (1) nach Anspruch 1, **dadurch gekennzeichnet, dass** der Wärmeschutzschaltkreis (9) einen Widerstand (8) umfasst, der in Serie mit dem Wärmeschutzelement (5) und der Gleichspannungsversorgung (7) verbunden ist.

3. Elektromotor (1) nach Anspruch 2, **dadurch gekennzeichnet, dass** die Steuerkarte (6) die Spannung von den Klemmen des Widerstands (8) prüft und für den Fall, dass der Spannungswert zwischen den Klemmen des Widerstands (8) null ist, erkennt, dass kein Strom durch den Wärmeschutzschaltkreis (9) fließt, und dafür sorgt, dass der Strom unterbrochen wird, der an die Wicklung (4) bereitgestellt wird.

## Revendications

1. Un moteur électrique (1) comprenant un stator (2), un rotor (3), un enroulement (4) formé des fils de cuivre isolés, le diamètre et le nombre d'enroulements déterminés selon la puissance désirée et les tours par minute, et une carte de contrôle (6) qui convertit une tension alternative reçue d'une alimentation principale en une tension continue qui alimente le moteur électrique (1), et **un circuit de protection thermique à part (9)** à travers lequel circule un faible courant, comprenant un protecteur thermique (5), permettant de détecter l'élévation de température en cas de surcharge ou blocage du rotor (3), coupant le courant qui passe à travers de lui-même et une source d'alimentation de courant continu (7) connecté en série au protecteur thermique (5) et produisant un faible courant, permettant d'alimenter le protecteur thermique (5) avec le courant produit par la source d'alimentation de courant continu (7), indépendamment du courant reçu de l'alimentation principale et livré à l'enroulement (4), **et caractérisé en ce que** ladite **carte de contrôle (6)** contrôle si le courant circule dans le circuit de protection thermique (9) et si le courant ne circule pas, coupe le courant livré à l'enroulement (4) en détectant que le protecteur thermique (5) a coupé le courant qui le traverse.

2. Un moteur électrique (1) selon la Revendication 1, **caractérisé par** le circuit de protection thermique (9) comprenant une résistance (8) connectée en série au protecteur thermique (5) et à la source d'alimentation de courant continu (7).

3. Un moteur électrique (1) selon la Revendication 2, **caractérisé par** la carte de contrôle (6) qui contrôle la tension reçue des embouts de la résistance (8) et lorsque la tension entre les embouts de la résistance (8) est zéro, détecte que le courant ne circule pas à travers du circuit de protection thermique (9) et permettant de couper le courant livré à l'enroulement (4).
